# EUROPÄISCHE PATENTSCHRIFT

(11) **EP 3 297 595 B1**
(45) Veröffentlichungstag und Bekanntmachung des Hinweises auf die Patenterteilung: **06.05.2020**
(21) Anmeldenummer: 16712214.2
(22) Anmeldetag: 22.03.2016
(51) Int. Cl.: A61J 1/14, A61J 1/20

(54) **KUNSTSTOFF-BEHÄLTERERZEUGNIS**
PLASTIC CONTAINER PRODUCT
PRODUIT RÉCIPIENT EN PLASTIQUE

(30) Priorität: 22.05.2015 DE 102015006489
(43) Veröffentlichungstag der Anmeldung: 28.03.2018
(73) Patentinhaber: Kocher-Plastik Maschinenbau GmbH, 74429 Sulzbach-Laufen (DE)
(72) Erfinder: SPALLEK, Michael, 55218 Ingelheim (DE); GESER, Johannes, 70839 Gerlingen (DE); GROH, Martin, 74405 Gaildorf (DE); SPRENG, Philipp, 89233 Neu-Ulm (DE)
(74) Vertreter: Bartels und Partner, Patentanwälte
(86) Internationale Anmeldenummer: PCT/EP2016/000497
(87) Internationale Veröffentlichungsnummer: WO 2016/188598

(56) Entgegenhaltungen:
- EP-A1- 0 621 027
- DE-A1-102012 021 525
- DE-A1-102013 012 809
- JP-A- H11 348 956
- US-A- 4 176 153

## Beschreibung

Die Erfindung betrifft ein Kunststoff-Behältererzeugnis mit den Merkmalen im Oberbegriff von Anspruch 1.

Beim Durchstechen von Kunststoff-Behältererzeugnissen für medizinische Zwecke (Pharmazeutika, Diagnostika), wie beispielsweise Injektionsfläschchen, Zylinderampullen oder Kunststoffbehältnisse für intravenöse Injektionen (DIN EN ISO 15747:2012-07) mit Injektions-Kanülen, insbesondere als Bestandteil von Entnahmespritzen, können leicht Partikel aus dem Verschlussmaterial "ausgestanzt" werden. Die dahingehend ausgestanzten, losen Partikel können in der Kanüle, der Injektionsspritze, oder im Behältererzeugnis selbst verbleiben. Dies kann unter anderem zu einem Verstopfen der Kanüle führen, was den Injektionsvorgang unmöglich macht, oder es können Partikel mit dem Füllgut ins Infusionssystem gelangen, was die Flussrate der Infusion deutlich verringern kann.

Im Hinblick auf diese Problematik wurden demgemäß bei der Verwendung von Injektionsfläschchen mit elastomerem Verschluss in der EN ISO 8871- 5:2014 bereits Grenzwerte vorgegeben, ebenso in der US Pharmacopoe Kapitel 381.

Diesem Problem der fachsprachlich auch mit Fragmentation bezeichneten Partikelverunreinigung durch Ausstanzen aus dem Kunststoff-Behältererzeugnis zu begegnen, wurden im Stand der Technik (US 5 868 721) bereits spezielle Nadel-Geometrien vorgeschlagen, was allerdings aufwändige und teure Spezial-Kanülen notwendig macht.

Durch die WO 81/02286 ist ein durch Spritzguss hergestellter Kunststoffbehälter bekannt mit bevorzugten, definierten Einstech-Positionen für einen Kunststoff-Hohldorn, eine Entnahmenadel oder Entnahmekanüle. An diesen Einstechpositionen muss die Wandstärke sehr dünn sein, und bevorzugt weniger als 0,254 Millimeter betragen. Solche sehr dünnen Stellen können beim Durchstechen zwar vorteilhaft sein und wenige partikelerzeugenden Stanzabfälle entstehen lassen; dennoch sind sie grundsätzlich nachteilig, da diese leicht zu Undichtigkeiten führen können, wenn im letzten Schritt der Herstellung des befüllten und verschlossenen Behältnisses, dem Sterilisationsprozess, die hohen Drücke und Temperaturen einer Autoklaven-Sterilisation (121 °C, 20 Minuten) wirken. Des Weiteren lassen sich im Rahmen von Blasform-Herstellprozessen, insbesondere im Rahmen von Blasform-, Füll- und Siegelverfahren, im Gegensatz zu Spritzguss-Prozessen gemäß WO 81/02286, solche dünnen Wandstärken nur mit großen Schwierigkeiten reproduzierbar in großen Stückzahlen herstellen.

In der US 4 574 965 ist demgegenüber ein nach einem Blasform-, Füll- und Siegelverfahren hergestelltes Behältererzeugnis bekannt mit einer speziell konzipierten Doppel-Dom-Geometrie für den Behälterkopf, um dergestalt beim Durchstechen mit einer Metall- oder Kunststoffkanüle für einen Entnahmevorgang aus dem Behälter ein sicheres Abdichten und keine Partikelbildung zu gewährleisten. Hierzu ist es notwendig, dass sich bei der bekannten Lösung während des Einstechens eine sog. Einsackung oder Einsenkung (Dimple) im Kopfteilmaterial bildet. Dies gelingt lediglich mit sog. Low-Density-Polyethylen(LDPE)-Materialien, wie Rexen PE 107 oder Eastman Chemical Tenite Polyallomer, deren Temperaturbeständigkeit jedoch für die übliche Autoklaven-Sterilisation (121 °C, 20 Minuten) bei weitem nicht ausreicht und so eine sichere Sterilisation - wie typischerweise für Infusions- und Spüllösungen gefordert - nicht gewährleistet ist. Die notwendige Doppel-Dom-Geometrie weicht sehr stark von der bewährten gemäß DIN EN ISO 15759:2006-05 Kopfgeometrie von Blasform-, Füll- und Siegel-Infusionsbehältern als Behältererzeugnisse ab und macht spezielle Kappensysteme notwendig, die nicht dem bewährten ISO-Standard 15759:2006-05 entsprechen, was wiederum kostenintensiv ist und die Funktionssicherheit des Gesamt-Behältersystems beeinträchtigen kann.

Die US 4 176 153 offenbart ein Kunststoff-Behältererzeugnis, insbesondere hergestellt nach dem Blasform-, Füll- und Siegelverfahren, mit einer Behälterwand, die in vorgebbaren Bereichen zwecks Zugang zum Behälterinhalt mittels einer Kanüle durchstechbar ist, wobei zum Vermeiden von Stanzteilen, die beim Durchstechen der Behälterwand mit der Kanüle entstehen, das mathematische Produkt aus der Behälterwandstärke im Durchstechbereich und dem Zugmodul nach ISO 527 des Kunststoffmaterials kleiner ist als 400 MPa·mm, besonders bevorzugt kleiner als 300 MPa·mm ist, und wobei das Behältererzeugnis ein Kopfteil aufweist.

Die DE 10 2013 012 809 A1 betrifft ein Kopfstück für einen mit einem Medium befüllten Behälter, vorzugsweise hergestellt aus Kunststoffmaterialien unter Einsatz eines Blasform-, Füll- und Siegelverfahrens.

Ausgehend von diesem Stand der Technik liegt der Erfindung die Aufgabe zugrunde, ein Behältererzeugnis zu schaffen, das insbesondere nach dem Blasform-, Füll- und Siegelverfahren herstellbar sowie autoklavierbar ist und bei dem die Wahrscheinlichkeit des Auftretens und die Anzahl ausgestanzter Partikel beim Durchstechen der Kunststoff-Behälterwand minimiert ist. Eine dahingehende Aufgabe löst ein Kunststoff-Behältererzeugnis mit den Merkmalen des Patentanspruchs 1 in seiner Gesamtheit.

Gemäß dem kennzeichnenden Teil des Patentanspruchs 1 ist das erfindungsgemäße Kunststoff-Behältererzeugnis dadurch gekennzeichnet, dass der Durchstechbereich auf der Kopfteiloberseite bei 1 bis 70 mm² und die Wandstärke des zu durchstechenden Behälterbereichs bei mindestens 0,3 mm liegt.

Dadurch, dass zum Vermeiden von losen Stanzteilen, die beim Durchstehen der Behälterwand mit der Kanüle entstehen, das mathematische Produkt bestehend aus der Behälterwandstärke im Durchstechbereich und dem Elastizitätsmodul (Zugmodul gemäß ISO 527 bei 50mm/min) des Kunststoffmaterials kleiner ist als 400 MPa·mm, besonders bevorzugt kleiner als 300 MPa·mm ist, ist für einen Durchschnittsfachmann auf dem Gebiet der Injektionsentnahmetechnologie in überraschender Weise erreicht, dass die Wahrscheinlichkeit des Auftretens und die mögliche Anzahl ausgestanzter, loser Partikel beim Durchstechen der Behälterwand mittels einer Entnahmenadel oder Entnahmekanüle deutlich minimiert ist.

In besonders vorteilhafter Weise wird die oben genannte Aufgabenstellung gelöst durch einstückige Behältererzeugnisse, hergestellt nach dem bekannten Blasform-, Füll- und Siegel (BFS)-Verfahren unter Verwendung von Polymeren mit hoher Wärmeformbeständigkeit, d.h. die Schmelztemperatur des jeweiligen Polymers beträgt nach ISO 3146 mindestens 130°C bei einer Streckdehnung von mehr als 12 % (bei 50 mm/min gemäß ISO 527). Dies ist selbst mit einfachen Behälterkopfgeometrien gemäß ISO 15759:2006-05 möglich.

Überraschenderweise hat sich gezeigt, dass sich eine weitere Reduktion der Partikelwahrscheinlichkeit in erfinderischer Weise erreichen lässt, wenn für das erfindungsgemäße Behältererzeugnis eine Kappe gewählt wird, mit einem elastomeren Dichtelement, das auf oder um den Durchstechbereich, einer Teilfläche der Behälterkopffläche, herum mit einer Flächenpressung von mindestens 20 N/cm², zumindest beim Durchstechvorgang selbst, auf die Behälterwand von außen her aufgepresst wird.

Dies kann mit an sich bekannten Kappen, wie beispielsweise in der US 2011/240642 A1 sowie in der DE 10 2004 051 300 C5 beschrieben, nicht sicher gewährleistet werden.

Das angesprochene elastomere Dichtelement kann dabei beispielsweise aus einem thermoplastischen Elastomer, einem Polyisopren, einem Silikon oder einem Halogenobutylkautschuk gebildet sein.

Weitere vorteilhafte Ausführungsformen sind Gegenstand der sonstigen Unteransprüche.

Im Folgenden wird die erfindungsgemäße Lösung anhand eines Behältererzeugnisses nebst erfindungsgemäßen Kappengestaltungen für einen solchen Behälter näher erläutert. Dabei zeigen in prinzipieller und nicht maßstäblicher Darstellung die
- Fig. 1: eine gegenüber einer praktischen Ausführungsform geringfügig vergrößert gezeichnete Vorderansicht eines Behälters in Form einer Infusionsflasche mit zwei gegenüberliegend angeordneten Zugängen, von denen die in der Figur obere mit einem Kopfteil gemäß dem Stand der Technik nach DIN ISO 15759 versehen ist;
- Fig. 2: eine gegenüber einer praktischen Ausführungsform in etwa doppelter Größe gezeichnete perspektivische Schrägansicht eines Ausführungsbeispiels eines Kopfteils des Behälters nach der Fig. 1;
- Fig. 3 bis 5: verschiedene, erfindungsgemäße Kappengestaltungen, jeweils in der Art eines Längsschnittes, die auf das Kopfteil des Behälters jeweils von oben her aufgeschweißt sind.
- Fig. 6: eine gegenüber einer praktischen Ausführungsform in etwa doppelter Größe gezeichnete perspektivische Schrägansicht eines weiteren Ausführungsbeispiels eines Kopfteils des Behälters nach der Fig. 1;
- Fig. 7 bis 8: verschiedene erfindungsgemäße Kappengestaltungen, jeweils in der Art eines Längsschnittes, die auf das Kopfteil des Behälters gemäß Fig. 6 jeweils von oben her aufgeschweißt sind.

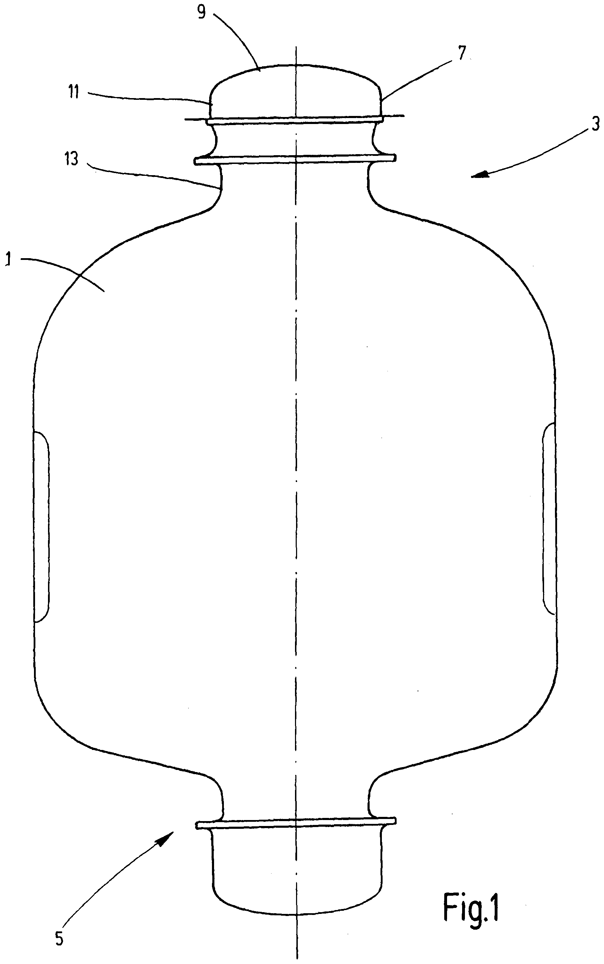

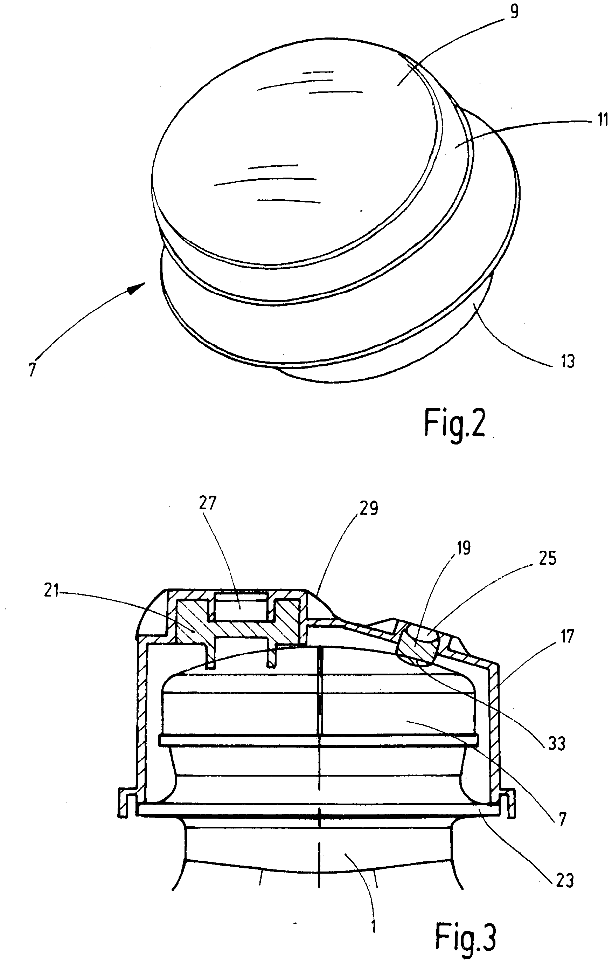

Die Fig. 1 zeigt einen nach einem Blasform-, Füll- und Siegelvorgang hergestellten, einstückigen Behälter in Form einer Infusionsflasche 1 als Behältererzeugnis mit einem oberen Zugang 3 und einem unteren Zugang 5. Das Behältererzeugnis 1 ist aus einem Kunststoffmaterial, insbesondere einem Polyolefinmaterial, hergestellt. An dem in der Fig. 1 obenliegenden Zugang 3 weist das Behältererzeugnis 1 ein integrales Kopfteil 7 auf. Das bei dem gezeigten Beispiel dem Stand der Technik entsprechend der DIN ISO 15759:2006-05 gebildete Kopfteil 7 kann mit einzelnen erfindungsgemäßen Kappen gemäß den Darstellungen nach den Fig. 3 bis 5, beispielsweise durch Schweißen, Umspritzen oder Siegeln, im Bereich des oberen Zugangs 3 der befüllten und verschlossenen Infusionsflasche 1 verbunden werden. Am stirnseitigen Ende des Kopfteils 7 ist für Entnahme- und/oder Zugabevorgänge eine durchgehend verlaufende Kopffläche 9 respektive Kopfteiloberseite 9 vorgesehen, die in der Art einer mittels einer Kanüle oder eines Einstichdorns penetrierbaren Kopfmembran einen Übergangsbereich 11 überspannt, an dem das Kopfteil 7 in den Halsteil 13 des Behältererzeugnisses 1 übergeht. Die durch diese Kopfmembran gebildete Kopffläche 9 überspannt den Übergangsbereich 11 mit einer gleichförmig konvexen Krümmung gemäß der Darstellung nach den Fig. 1 und 2.

Die in Fig. 1 gezeigte Infusionsflasche 1 als Behältererzeugnis lässt sich mit Hilfe einer Bottelpack-Anlage des Typs bp 364 der Firma rommelag mit einer beispielhaften Behältergröße von 500 ml im Blasform-, Füll- und Siegelverfahren herstellen, die über die genannte Kopfform verfügt. Der insoweit einstückig hergestellte Behälter wurde unter Verwendung von Polyolefinen mit hoher Wärmeformbeständigkeit, d.h. einer Schmelztemperatur nach ISO 3146 von mindestens 130°C und einem Schmelzindexwert (MFR230°C/2.16 kg nach ISO 1133) von weniger als 3 g/10 min hergestellt. Um die Gefahr der Partikelbildung oder der Fragmentation zu verringern, wurde erfindungsgemäß ein Polymer mit einer Streckdehnung von bevorzugt mehr als 12 % (bei 50 mm/min gemäß ISO 527 -1/-2) gewählt und für das Produkt die Behälterwandstärke in Millimeter im Durchstechbereich und der Elastizitätsmodul (Zugmodul bei 50 mm/min gemäß ISO 527) des Behälterpolymers zumindest an dieser Stelle derart gewählt, dass das mathematische Produkt (im Folgenden auch als Fragmentationskennwert bezeichnet) geringer ist als 400 MPa·mm, bevorzugt geringer ist als 300 MPa·mm, wobei die Wandstärke im Durchstechbereich jedoch mindestens 0,3 mm betragen sollte.

Es lässt sich eine weitere Reduktion der Fragmentationswahrscheinlichkeit herbeiführen, wenn für das erfindungsgemäße Behältererzeugnis eine Kappe gem. Fig. 3 bis 5 mit einem Kappengehäuse 17 gewählt wird, deren jeweiliges elastomere Dichtelement 19, 21, bestehend aus üblichen Elastomermaterialien, auf oder um den Durchstechbereich 33 herum mit einer Flächenpressung von mindestens 20 N/cm² zumindest beim Durchstechen der Behälterwand mit einer Kanüle auf diese aufgepresst ist. Nach dem Verschließen des Kopfteils 7 unter Bildung der geschlossenen Kopffläche 9 wird auf die gezeigten Kopfteile 7 nach den Fig. 3 bis 5 das jeweils zuordenbare Kappengehäuse 17 dicht aufgebrächt. Danach erfolgt eine Autoklavierung bei 121°C für eine Zeitdauer von 20 Minuten.

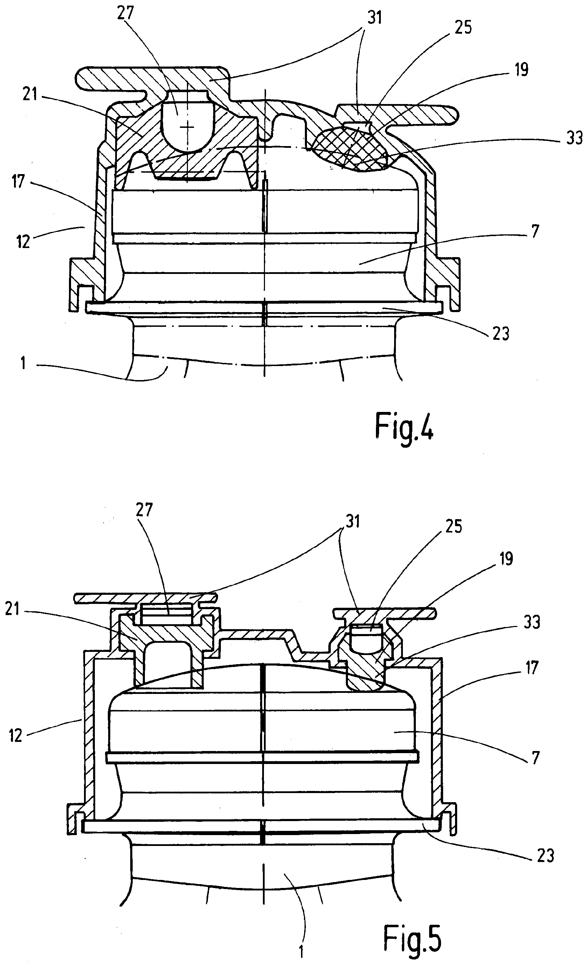

Das jeweilige Kappengehäuse 17 ist gemäß den Darstellungen nach den Fig. 3 bis 5 mit einem umlaufend vorspringenden Kragen 23 des Behälterkopfteils 7 des BFS-Behälters 1 (in den Fig. 3 bis 5 nicht vollständig gezeigt) umlaufend dicht verbunden. Das Kappengehäuse 17 weist auf seiner Oberseite zwei Zugänge 25 und 27 auf, die jeweils von einem leicht entfernbaren Originalitätsverschluss in Form von Siegelfolien 29 (Fig. 3) oder in Form von abtrennbaren Laschen 31 (s. Fig. 4 und 5) mikrobiologisch dicht verschlossen sind. Die angesprochenen Zugänge 25 und 27 dienen dem Durchstechen mit einer Kanüle, insoweit ist ein Kanülenzugang 25 realisiert, wobei der andere Zugang als Hohldornzugang 27 dem Durchstechen mit einem Einstechteil in Form eines Hohldorns, beispielsweise eines Transfusionsgeräts gemäß EN ISO 1135-4, dient. Unterhalb der aufgezeigten Originalitätsverschlüsse 29, 31 befinden sich jeweils die bereits angesprochenen elastomeren Dichtelemente 19 bzw. 21, die unmittelbar aus einem elastomeren Material bestehen und sich zwischen der Innenseite des Kappengehäuses 17 und der Kopffläche 9 des Infusionsbehälters 1 erstrecken.

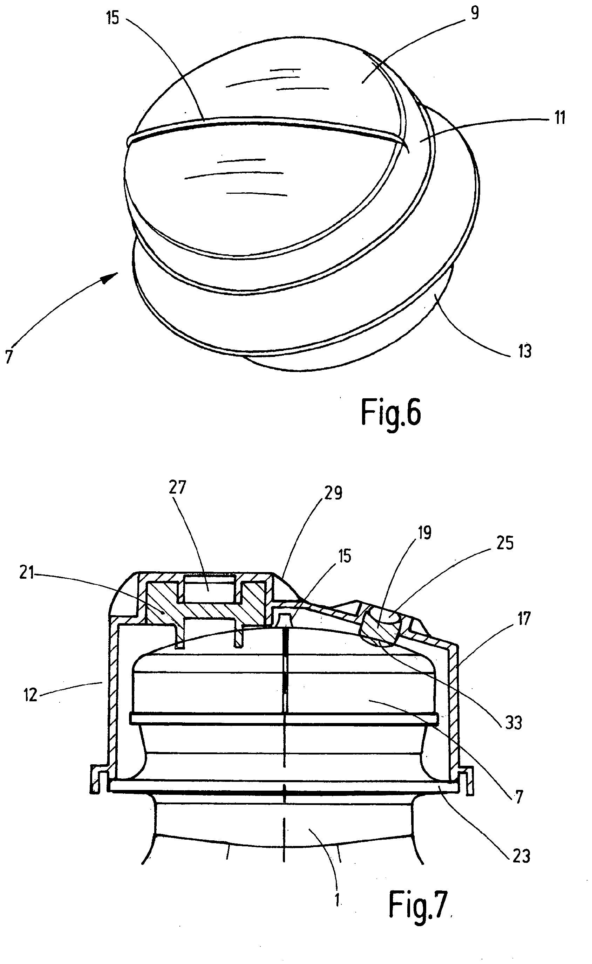

Erfindungsgemäß ist vorgesehen, dass zumindest das elastomere Dichtelement 19 des Kanülen-Zugangs 25 derart ausgebildet ist, dass es mit einem Mindestdruck fest auf eine Teilfläche des Behälterkopfes 7, sprich den Durchstechflächenbereich, oder einfach Durchstechbereich 33 gedrückt oder gepresst wird. Die Flächenpressung des Elastomerelements 19 auf den Durchstechbereich 33 kann konstruktiv über die Querschnittsfläche und die Shorehärte des Elastomerelements 19 sowie die Höhe des Kappengehäuses 17 bestimmt werden. Darüber hinaus sind Material- und/oder Formänderungen durch den üblicherweise erforderlichen Autoklavierprozess bei 121°C und 20 Minuten Prozessdauer konstruktiv zu berücksichtigen. So kann es insbesondere bei Behältern mit einer Fragmentationskennwert kleiner als 300 MPa·mm zum Nachgeben des Durchstechflächenbereichs 33 um 2 bis 6 mm kommen. Um die erfindungsgemäß erforderliche Flächenpressung auf den Durchstechbereich 33 sicher zu gewährleisten, kann vorteilhaft eine stegartige Verstärkung, beispielsweise in Form einer verstärkenden Rippe 15, gemäß Fig. 6 und in PCT/EP 2014/002076 erläutert, optional verwendet werden.

Die Fig. 6 zeigt die Kopffläche 9 mit einer über sie verlaufenden Verstärkungsrippe 15 versehen, die mit ihrer konvexen Krümmung der konvexen Krümmung der Kopffläche 9 nachfolgt. Die Verstärkungsrippe 15 bildet einen deutlich vorstehenden Steg aus, der die Kopffläche 9 in dieser diametral gelegen überspannt. Diese stegartige Rippe 15 erlaubt die sichere Aufbringung der zur Fragmentationsverringerung nötigen Flächenpressung, indem sie den Widerstand gegen die Durchbiegung der Wölbung der Kopffläche 9 in Richtung des Behälterinneren erhöht, was sich durch die Herstellung einer festen Verbindung zwischen Kappe - beispielsweise durch Verschweißen oder Verkleben - zusätzlich steigern lässt.

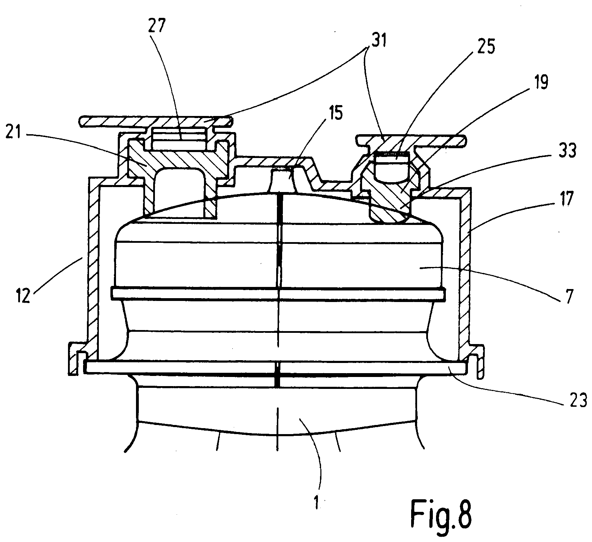

Bei Ausführungsformen der Kopffläche 9 gemäß Fig. 6 können, wie in Fig. 7 und 8 gezeigt, Kappen gemäß Fig. 3 und Fig. 4 verwendet werden.

Die bevorzugte Größe des Durchstechbereichs 33 liegt bei 1 mm² bis 70 mm², besonders bevorzugt bei 20 mm² bis 50 mm². Die bevorzugte Shorehärte des elastomeren Dichtelements 19 liegt bei 20 bis 65 Shore A, besonders bevorzugt bei 25 bis 50 Shore A. Die Flächenpressung sollte mehr als 20 N/cm² betragen, um das Fragmentationsrisiko dadurch signifikant senken zu können.

Mit den Behältererzeugnissen mit den aufgesetzten Kappen gemäß den Ausgestaltungen nach den Fig. 3 und 5 sowie mit Kappen ohne Flächenpressung wurden Fragmentationsprüfungen ähnlich wie in der ISO 15759:2005 bzw. der US Pharmakopöe Kapitel 381 "Fragmentation" beschrieben durchgeführt und jeweils die Anzahl der Fragmente aus dem Behältermaterial bei 48 Durchstichen mit Stahlkanülen gemäß ISO 7864 und einem Außendurchmesser von 0,8 mm bestimmt. Der Grenzwert für Fragmentation liegt gemäß der US Pharmakopöe Kapitel 381 "Fragmentation" bei 5 Fragmenten.

Als Behälter-Polymere wurden folgende 8 verschiedene Materialien, B1, B2, LB1, LB2, T1, M1, M2 und M3 verwendet.

B1 ist ein PP-Copolymer Typ Bormed SB815MO der Fa. Borealis mit einem Elastitätsmodul (Zugmodul gemäß ISO 527 bei 50 mm/min) von 475 MPa.

LB1 ist ein Polypropylen Typ Purell SM 170G der Fa. LyondellBasell mit einem Elastitätsmodul von 650 MPa.

B2 ist ein Polypropylen Typ Bormed RB845MO der Fa. Borealis mit einem Elastitätsmodul von 1000 MPa.

LB2 ist ein modifiziertes Random-Copolymer Typ Purell RP270G der Fa. LyondellBasell mit einem Elastitätsmodul von 950 MPa.

T1 ist ein Polypropylen Typ PPM R021 speziell für medizinische Anwendungen der Fa. Total mit einem Elastitätsmodul von 1000 MPa.

M1 ist ein Blend mit einem Elastitätsmodul von ca. 730 MPa hergestellt aus 75% des Materials LB2 mit 25% des Vistamaxx™ 3020 einem PP-basierten Elastomer der Fa. Exxon.

M2 ist ein Blend mit einem Elastitätsmodul von ca. 680 MPa hergestellt wie M1 jedoch 30% Vistamaxx™ 3020-Anteil.

M3 ist ein Blend mit einem Elastitätsmodul von ca. 640 MPa hergestellt wie M1 jedoch 35% Vistamaxx™ 3020-Anteil.

Das Zumischen von solchen Funktionsmasterbatches wie Vistamaxx ermöglicht die Modifikation der mechanischen Eigenschaften. Hierzu gehören auch andere Materialien, wie sie unter den Markenbezeichnungen Dow Versify oder Melitek meliflex XC Polymer+ und andere bekannt geworden sind, wobei die chemische Eignung für pharmazeutische Produkte zu berücksichtigen sind.

Die Ergebnisse sind - geordnet nach steigendem Fragmentationskennwert - in der nachfolgenden Tabelle zusammengefasst. Sie zeigen, dass ab einem Fragmentationskennwert von weniger als 400 MPa·mm das Fragmentationsverhalten deutlich verbessert ist, was sich durch eine erfindungsgemäße Kappe überraschenderweise weiter verbessern lässt.

| | | | Fragmentations kennwert | mit Kappe ohne Flächenpres sung | mit erfindungsge mäßer Kappe Abb 3 | mit erfindungsge mäßer Kappe Abb 5 |
|---|---|---|---|---|---|---|
| Versuch Nr. | Material Behälter | durchschn. Wandstärke Durchstichbe reich in mm | E-Modul x Wandstärke in MPa*mm | Anzahl Fragmente | Anzahl Fragmente | Anzahl Fragmente |
| 1 | B1 | 0,3 | 143 | 2 | 1 | 1 |
| 2 | B1 | 0,41 | 195 | 1 | 0 | 1 |
| 3 | LB1 | 0,33 | 215 | 1 | 0 | 0 |
| 4 | M3 | 0,34 | 218 | 1 | 0 | 0 |
| 5 | M2 | 0,33 | 224 | 1 | 1 | 0 |
| 6 | M1 | 0,32 | 234 | 2 | 0 | 2 |
| 7 | B1 | 0,53 | 252 | 4 | 1 | 2 |
| 8 | LB1 | 0,39 | 254 | 2 | 2 | 1 |
| 9 | M3 | 0,45 | 288 | 2 | 0 | 1 |
| 10 | B1 | 0,61 | 290 | 4 | 3 | 2 |
| 11 | M1 | 0,4 | 292 | 3 | 0 | 2 |
| 12 | M2 | 0,45 | 306 | 3 | 2 | 2 |
| 13 | B1 | 0,67 | 318 | 4 | 4 | 4 |
| 14 | B2 | 0,32 | 320 | 3 | 3 | 2 |
| 15 | LB2 | 0,34 | 323 | 2 | 2 | 1 |
| 16 | T1 | 0,33 | 330 | 4 | 2 | 1 |
| 17 | LB1 | 0,52 | 338 | 3 | 2 | 2 |
| 18 | M3 | 0,55 | 352 | 3 | 2 | 0 |
| 19 | M2 | 0,52 | 354 | 3 | 1 | 1 |
| 20 | B1 | 0,75 | 356 | 4 | 3 | 3 |
| 21 | M3 | 0,58 | 371 | 3 | 2 | 2 |
| 22 | M1 | 0,52 | 380 | 4 | 3 | 1 |
| 23 | LB2 | 0,4 | 380 | 3 | 2 | 3 |
| 24 | LB1 | 0,59 | 384 | 4 | 2 | 3 |
| 25 | T1 | 0,38 | 380 | 3 | 1 | 3 |
| 26 | B1 | 0,87 | 413 | 6 | 4 | 4 |
| 27 | B2 | 0,42 | 420 | 5 | 3 | 4 |
| 28 | M2 | 0,62 | 422 | 5 | 3 | 2 |
| 29 | M3 | 0,72 | 461 | 6 | 5 | 4 |
| 30 | M1 | 0,64 | 467 | 6 | 5 | 4 |
| 31 | M2 | 0,69 | 469 | 7 | 4 | 5 |
| 32 | B2 | 0,48 | 480 | 5 | 5 | 5 |
| 33 | LB1 | 0,74 | 481 | 6 | 5 | 5 |
| 34 | LB2 | 0,53 | 504 | 7 | 5 | 4 |
| 35 | M1 | 0,69 | 504 | 6 | 6 | 6 |
| 36 | T1 | 0,52 | 520 | 6 | 5 | 5 |
| 37 | LB2 | 0,58 | 551 | 6 | 5 | 6 |
| 38 | LB1 | 0,85 | 553 | 7 | 6 | 6 |
| 39 | T1 | 0,62 | 620 | 8 | 6 | 6 |
| 40 | B2 | 0,64 | 640 | 7 | 7 | 6 |
| 41 | LB2 | 0,72 | 684 | 6 | 5 | 5 |
| 42 | T1 | 0,69 | 690 | 10 | 5 | 6 |
| 43 | B2 | 0,75 | 750 | 10 | 8 | 9 |

Mit der vorstehend beschriebenen Erfindung ist erreicht, einen nach dem BSF-Verfahren hergestellten, autoklavierbaren Behälter derart auszugestalten, dass sowohl mit Kappe als auch ohne Kappe die Wahrscheinlichkeit und Anzahl ausgestanzter Partikel beim Durchstechen der Behälterwand des Behälters minimal ist. Dies hat so keine Entsprechung im Stand der Technik.

## Patentansprüche

1. Kunststoff-Behältererzeugnis, insbesondere hergestellt nach dem Blasform-, Füll- und Siegelverfahren, mit einer Behälterwand, die in vorgebbaren Bereichen zwecks Zugang zum Behälterinhalt mittels einer Kanüle durchstechbar ist, wobei zum Vermeiden von Stanzteilen, die beim Durchstechen der Behälterwand mit der Kanüle entstehen, das mathematische Produkt aus der Behälterwandstärke im Durchstechbereich (33) und dem Zugmodul nach ISO 527 des Kunststoffmaterials kleiner ist als 400 MPa·mm, besonders bevorzugt kleiner als 300 MPa·mm ist, und wobei das Behältererzeugnis ein Kopfteil (7) aufweist, **dadurch gekennzeichnet, dass** der Durchstechbereich (33), der auf der Kopfteiloberseite (9) liegt, bei 1 bis 70 mm² und die Wandstärke des zu durchstechenden Behälterbereichs bei mindestens 0,3 mm liegt.

2. Behältererzeugnis nach Anspruch 1, **dadurch gekennzeichnet, dass** als Kunststoffmaterial mindestens ein Polymer eingesetzt ist mit
- einer hohen Wärmeformbeständigkeit, insbesondere mit einer Schmelztemperatur nach ISO 3146 von mindestens 130 °C, und
- einer mittleren Dehnung nach ISO 527 von mehr als 12 %.

3. Behältererzeugnis nach einem der vorstehenden Ansprüche, **dadurch gekennzeichnet, dass** als Kunststoffmaterial ein Polypropylen, ein Polypropylen-Copolymer oder ein Blend mit PP-basierten Elastomeren zu dessen Herstellung eingesetzt sind.

4. Behältererzeugnis nach einem der vorstehenden Ansprüche, **dadurch gekennzeichnet, dass** das Kopfteil (7) des Behälters mit einer Kappe (12) abgedeckt ist, die mit dem Kopfteil (7) fest verbunden ist.

5. Behältererzeugnis nach Anspruch 4, **dadurch gekennzeichnet, dass** zwischen der Kappe (12) und der Kopfteiloberseite (9) des Behälters mindestens ein durchstechbarer Einsatz (19), vorzugsweise aus elastomerem Material gebildet, vorhanden ist, sodass er zumindest beim Einstechen mit einer Flächenpressung von vorzugsweise mehr als 20 N/cm² auf die Kopfteiloberseite (9) drückt.

6. Behältererzeugnis nach Anspruch 5, **dadurch gekennzeichnet, dass** mindestens zwei voneinander verschiedene durchstechbare Einsätze (19, 21) vorhanden sind, die unterschiedlichen Zwecken dienen, zum einen (19) für das Durchstechen mittels einer Kanüle, zum anderen (21) für das Durchstechen mittels eines Hohldorns.

7. Behältererzeugnis nach Anspruch 5 oder 6, **dadurch gekennzeichnet, dass** die Härte mindestens eines elastomeren Einsatzes (19) bei 20 bis 70 Shore A, besonders bevorzugt bei 25 bis 50 Shore A, liegt.

8. Behältererzeugnis nach einem der vorstehenden Ansprüche, **dadurch gekennzeichnet, dass** der Durchstechbereich (33) auf der Kopfteiloberseite (9) bei 20 bis 50 mm² liegt.

9. Behältererzeugnis nach einem der vorstehenden Ansprüche, **dadurch gekennzeichnet, dass** das Kopfteil (7) des Behälters (1) eine Verstärkungsrippe (15) aufweist.

10. Behältererzeugnis nach einem der vorstehenden Ansprüche, **dadurch gekennzeichnet, dass** das Kopfteil (7) des Behälters (1) eine Verstärkungsrippe (15) aufweist und mit einem Gehäuse (17) der Kappe (12) fest verbunden ist.

## Claims

1. Plastic container product, particularly manufactured using the blow-fill-seal method, with a container wall which can be pierced in pre-definable regions by a cannula to gain access to the container contents, wherein, to avoid punched parts, which arise when piercing the container wall with the cannula, the mathematical product of the container wall thickness in the piercing region (33) and the tensile modulus of the plastics material according to ISO 527 is less than 400 MPa.mm, more preferably less than 300 MPa.mm, and wherein the container product comprises a top part (7), **characterised in that** the piercing region (33), which lies on the upper side (9) of the top part, covers 1 to 70 mm² and the wall thickness of the container region to be pierced is at least 0.3 mm.

2. Container product according to claim 1, **characterised in that** at least one polymer is used as a plastics material with a high heat resistance, particularly with a melting temperature according to ISO 3146 of at least 130°C, and an average elongation according to ISO 527 of more than 12%.

3. Container product according to any one of the preceding claims, **characterised in that** a polypropylene, a polypropylene copolymer or a blend with PP-based elastomers is used as a plastics material to manufacture said container product.

4. Container product according to any one of the preceding claims, **characterised in that** the top part (7) of the container is covered with a cap (12), which is firmly connected to the top part (7).

5. Container product according to claim 4, **characterised in that** at least one pierceable insert (19), preferably formed from elastomer material, is provided between the cap (12) and the upper side (9) of the top part of the container so that it presses on the upper side (9) of the top part at least when piercing with a surface pressure of preferably more than 20 N/cm².

6. Container product according to claim 5, **characterised in that** at least two different pierceable inserts (19, 21) are provided, each serving different purposes, on the one hand (19) for piercing by means of a cannula, and on the other hand (21) for piercing by means of a hollow needle.

7. Container product according to either claim 5 or 6, **characterised in that** the hardness of at least one elastomer insert (19) is 20 to 70 Shore A, more preferably 25 to 50 Shore A.

8. Container product according to any one of the preceding claims, **characterised in that** the piercing region (33) is located on the upper side (9) of the top part over an area of 20 to 50 mm².

9. Container product according to any one of the preceding claims, **characterised in that** the top part (7) of the container (1) comprises a reinforcement rib (15).

10. Container product according to any one of the preceding claims, **characterised in that** the top part (7) of the container (1) comprises a reinforcement rib (15) and is firmly connected to a housing (17) of the cap (12).

## Revendications

1. Produit récipient en matière plastique, fabriqué notamment par le procédé de moulage par soufflage, remplissage et scellement, comprenant une paroi de récipient, qui, dans des parties pouvant être données à l'avance, peut, en vue d'accéder au contenu du récipient, être transpercée au moyen d'une canule, dans lequel, pour empêcher d'avoir des parties estampées, qui se créent lorsque la canule transperce la paroi du récipient, le produit mathématique, de l'épaisseur de la paroi du récipient dans la partie (33) à transpercer par le module de traction suivant ISO 527 de la matière plastique, est plus petit que 400 MPa.mm, d'une manière préférée plus petit que 300 MPa.mm, et dans lequel le produit récipient a une partie (7) de tête, **caractérisé en ce que** la partie (33) à transpercer, sur le côté (9) supérieur de la partie de tête, va de 1 à 70 mm² et l'épaisseur de paroi de la partie du récipient à transpercer est d'au moins 0,3 mm.

2. Produit récipient suivant la revendication 1, **caractérisé en ce qu'**il est utilisé comme matière plastique au moins un polymère ayant
- une grande résistance à la déformation sous l'effet de la chaleur, en ayant notamment un point de fusion suivant ISO 3146 d'au moins 130°C, et
- une dilatation moyenne suivant ISO 527 de plus de 12%.

3. Produit récipient suivant l'une des revendications précédentes, **caractérisé en ce qu'**il est utilisé pour sa fabrication, comme matière plastique, un polypropylène, un copolymère de polypropylène ou un mélange d'élastomères à base de PP.

4. Produit récipient suivant l'une des revendications précédentes, **caractérisé en ce que** la partie (7) de tête du récipient est recouverte d'un capuchon (12) relié fixement à la partie (7) de tête.

5. Produit récipient suivant la revendication 4, **caractérisé en ce qu'**il y a, entre le capuchon (12) et le côté (9) supérieur de la partie de tête du récipient, au moins un insert (9) pouvant être transpercé, de préférence en une matière élastomère, de manière à ce que, au moins lors du transpercement, il appuie, avec une pression de surface de préférence de plus de 20 N/cm² sur le côté (9) supérieur de la partie de tête.

6. Produit récipient suivant la revendication 5, **caractérisé en ce qu'**il y a au moins deux inserts (19, 21) pouvant être transpercés, différents l'un de l'autre, qui servent à des but différents, d'une part (19) pour être transpercés au moyen d'une canule, d'autre part (21) pour être transpercés au moyen d'un poinçon creux.

7. Produit récipient suivant la revendication 5 ou 6, **caractérisé en ce que** la dureté d'au moins un insert (19) élastomère va de 20 à 70 Shore A, d'une manière particulièrement préférée de 25 à 50 Shore A.

8. Produit récipient suivant l'une des revendications précédentes, **caractérisé en ce que** la partie (33) à transpercer, sur le côté (9) supérieur de la partie de tête, va de 20 à 50 mm².

9. Produit récipient suivant l'une des revendications précédentes, **caractérisé en ce que** la partie (7) de tête du récipient (1) a une nervure (15) de renfort.

10. Produit récipient suivant l'une des revendications précédentes, **caractérisé en ce que** la partie (7) de tête du récipient (1) a une nervure (15) de renfort et est reliée fixement à une enveloppe (17) du capuchon (12).
